# EUROPEAN PATENT APPLICATION

(11) **EP 2 306 685 A1**
(43) Date of publication of application: **06.04.2011**
(21) Application number: 09305935.0
(22) Date of filing: 02.10.2009
(51) Int. Cl.: H04L 29/06, G06F 21/00

(54) **Secure provision of access to an online user account**

(71) Applicant: Thomson Licensing, Inc., 92100 Boulogne-Billancourt (FR)
(72) Inventor: Eluard, Marc, 92648, Boulogne cedex (FR); Prigent, Nicolas, 92648, Boulogne cedex (FR); Diehl, Eric, 92648, Boulogne cedex (FR)
(74) Representative: Berthier, Karine

(57) **Abstract**

A method of secure program execution particularly suited for online gaming. A user has a console (110) and a game support (120). When the user asks 210 to play the game online, a processor (124) in the console contacts (220) an online server (110) through a network (140). The processor (124) receives (230) at least one challenge and forwards it to an authorisation processor (134) of the game support (120) that responds (240) via the console (120). During authentication, the authorisation processor (134) provides (250) a unique identifier and proves that it is a legitimate secure processor for the game. Upon successful authentication, the online server (110) grants (260) the user access to a user account (118) linked to the identifier. Also provided is a game support (120) and combination of console (110) and game support (120).

## Description

### FIELD OF THE INVENTION

The present invention relates generally to digital content protection, and in particular to providing access to user accounts online.

### BACKGROUND OF THE INVENTION

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Many existing computer games propose online versions: players connect to servers over the Internet to play together and share the experience. These servers store player information, such as for example the player's character in the game - the user's "avatar" - in a user account. To prevent piracy, cheating and account theft, access to users accounts are controlled.

A common method of controlling access is to provide players with a serial number, often when the game is purchased. The serial number is verified during registration in order to check that the game is legitimate, i.e. that the player does not use a pirate copy of the game. At the end of the registration phase, a username-password couple is chosen by or assigned to the player, who will use it upon each connexion to the game server.

However, this access control system has been showed insufficient for a number of reasons. First, for some games, pirate serial-number generators generate serial numbers that successfully pass the verification step, thereby sidestepping part of the verification process. Second, username-password couples may be compromised, for example through brute-force attacks, guessing, or even by using key-logger software on the legitimate user's computer.

It will therefore be appreciated that there is a need for an authentication system that overcomes at least some of the drawbacks of the prior art. This invention provides such a solution.

### SUMMARY OF THE INVENTION

In a first aspect, the invention is directed to a method of providing access to a user account in a system that comprises an online server, a user device and a digital content support. The user device requests access to the user account from the online server which returns at least one authentication request that is forwarded by the user device to an authentication processor of the digital content support. The authentication processor responds to the at least one authentication request to prove that it is a legitimate authentication processor and sends a unique identifier to the online server. The online server then provides access to the user account corresponding to the unique identifier if the authentication processor responded correctly to the at least one authentication request.

In a first preferred embodiment, the authentication processor receives a password resulting from input made by a user and proceeds with the method only if the password is correct.

In a second preferred embodiment, the user device executes a program application stored in a storage area of the digital content support and the authentication processor proves that it is a legitimate processor for the program application.

In a second aspect, the invention is directed to a combination of a user device and a digital content support, the combination being adapted to request access to a user account from an online server. The user device is adapted to send, to the online server, a request to access the user account, receive at least one authentication request from the online server, and forward the at least one authentication request to an authentication processor of the digital content support. The digital content support comprises the authentication processor adapted to store a unique identifier that is unique for the authentication processor, respond to the at least one authentication request so as to prove that it is a legitimate authentication processor, and send the unique identifier to the online server.

In a first preferred embodiment, the digital content support comprises a storage area that stores at least parts of a program application and the authentication processor is adapted to prove that it is a legitimate processor for the program application.

In a third aspect, the invention is directed to a digital content support comprising a storage area and an authentication processor. The storage area comprises a program application for execution by a user device intended to interact with an online server during execution of the program application. The authentication processor is adapted to store a unique identifier that is unique for the authentication processor; receive, from the user device, at least one authentication request originating from the online server; respond to the at least one authentication request so as to prove that it is a legitimate authentication processor; and send a unique identifier to the online server.

In a first preferred embodiment, the authentication processor is further adapted to store data allowing password verification, receive a password resulting from input made by a user and respond to the authentication request only if the password is successfully verified using the data allowing password verification

### BRIEF DESCRIPTION OF THE DRAWINGS

Preferred features of the present invention will now be described, by way of non-limiting example, with reference to the accompanying drawings, in which:
Figure 1 illustrates a game environment 100 according to a preferred embodiment of the present invention; and
Figure 2 illustrates an authentication method according to a preferred embodiment of the present invention.

### PREFERRED EMBODIMENT OF THE INVENTION

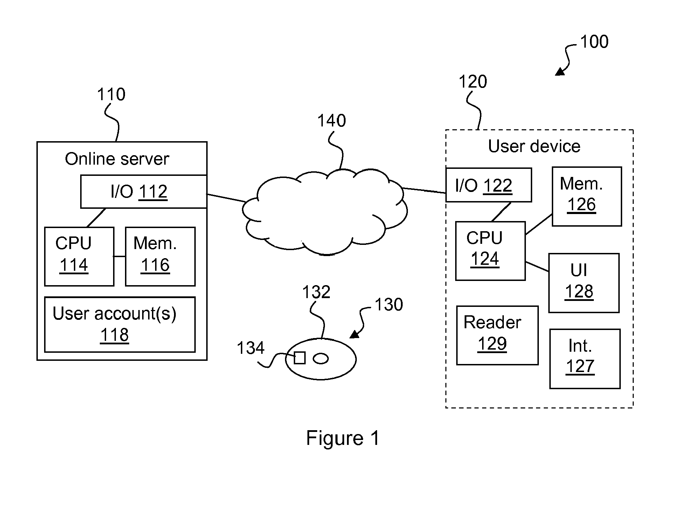

Figure 1 illustrates a game environment 100 according to a preferred embodiment of the present invention. The environment 100 comprises an online server 110 and a user device 120 that are functionally interconnected via a network 140, such as a LAN or, advantageously, the Internet.

The online server 110 comprises an interface 112 for communication with user devices via the network 140, at least one processor 114 (hereinafter "processor") for authorising players, negotiating secure communication parameters, etc., and memory 116 that for example may be implemented in RAM memory and/or one or more hard disks. The memory 116 stores information about at least one user account 118, notably a unique identifier.

The user device 120 comprises an interface 122 for communication with the online server 110 over the network 140, at least one processor 124 (hereinafter "processor") for executing game functions and for participating in authentication process of the embodiments of the present invention, and memory 126, advantageously RAM or Flash memory. The user device 120 further comprises a user interface 128 for interaction with one or more players and a reader 129 for interaction with a digital content support 130.

The digital content support 130 is advantageously an optical storage medium such as a DVD or a CD-ROM, but it may also take other suitable forms, such as a solid state memory cartridge. The digital content support 130 comprises a storage area 132 that stores at least parts of the game application. The digital content support 130 further comprises at least one processor 134 (hereinafter "authorisation processor") and memory (not shown) for use by the authorisation processor 134. The authorisation processor 134 is advantageously a tamper-resistant secure processor, designed to make it difficult or impossible to hack the processor in order to access information therein. It will be appreciated that the user device 120, in particular when adapted to interact with optical storage media, may further comprise an interface 127 that is adapted to interact with the authorisation processor 134.

The authorisation processor 134 stores the relevant information that enables it to prove that it is a legitimate processor for the game application, as well as a unique identity that is used by the online server 110 to link this authentication processor 134 to a user account 118. A single user account 118 may be linked to one or more avatars, i.e. a given user may have more than one virtual persona in the game and a user account 118 may also be shared by a plurality of persons such as the children in a family.

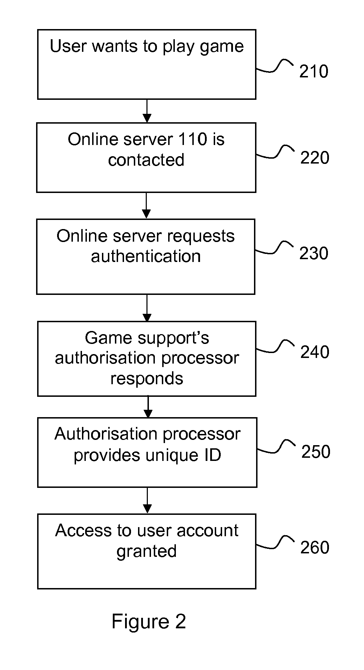

Figure 2 illustrates an authentication method according to a preferred embodiment of the present invention. When a user asks 210 to play the game online, the processor 124 executing the game functions contacts 220 the online server 110 through the network 140. The processor 124 receives 230 at least one request for an authentication message from the online server 110. The processor 124 forwards the at least one request via the interface 127 to the authorisation processor 134 that responds 240 in an appropriate manner. Any suitable authentication protocol may be used, such as for example a protocol based on challenge-response; the authentication protocol itself is outside the scope of the present invention. Authentication messages are then exchanged between the authorisation processor 134 and the online server 110, relayed by the user device 120. During authentication, the authorisation processor 134 provides 250 its identifier and proves that it is a legitimate secure processor for the game.

Upon successful authentication, the online server 110 informs the authorisation processor 134 of this and access to the user account 118 linked to the identifier is granted 260. If the authentication fails, the access to the user's account is not granted. Preferably, during (or immediately following) authentication, the authorisation processor 134 and the online server 110 negotiate parameters to secure the communication between the user device 120 and the online server 110. The parameters are forwarded to the user device 120 by the authorisation processor 134.

It is preferred that the authorisation processor 134 require some authentication from the user, such as a password, during the authentication with the online server 110. This can for example prevent an attacker from getting access to the legitimate user's user account 118 in case of theft.

In a preferred embodiment, the user device 120 is a computer or a game console and the interface 127 is a contact-less smart-card reader. The authorisation processor 134 is preferably a contact-less smart card that is stuck on to the optical disk carrying the game. It contains a 1024-bit RSA public-private key pair, a 64-bit unique identifier (that advantageously is based on the public key) and a certificate, advantageously provided by the authority that manages the game, showing that the contact-less smart card is legitimate. The authorisation processor 134 also comprises an interface for communication with the processor 124 executing the game. Communication between the user device 120 and the online server 110 (and hence also between the authorisation processor 134 and the online server 110) preferably take place over the Internet. It is advantageous to use EAP-TLS (Extensible Authentication Protocol-Transport Layer Security) as authentication protocol between the authorisation processor 134 and the online server 110.

It will be appreciated that the present invention can provide the following advantages:
- A better protection against piracy, as it is difficult to create a proper authorisation processor with the necessary information (particularly the required certificates). Consequently, it is not computationally feasible to forge illegitimate access to the game. Moreover, a malicious user cannot share its serial number and authentication information, since this is securely stored in the authorisation processor.
- A better protection against account theft; it is not possible to guess a username-password couple or to obtain it using a key-logger, since the information is stored in the authorisation processor.
- User friendliness as players do not need to remember a user name and password (unless the optional feature of having the authorisation processor require a password).
- The authorisation processor performs two functions, instead of the single authentication function in the prior art, which leads to the surprising results enumerated above in an efficient manner, since no external hardware is required.

Each feature disclosed in the description and (where appropriate) the claims and drawings may be provided independently or in any appropriate combination. Features described as being implemented in hardware may also be implemented in software, and vice versa. Connections may, where applicable, be implemented as wireless connections or wired, not necessarily direct or dedicated, connections.

Reference signs appearing in the claims are by way of illustration only and shall have no limiting effect on the scope of the claims.

## Claims

1. A method of providing access to a user account (118) in a system (100) comprising an online server (110), a user device (120) and a digital content support (130), the method comprising the steps of:
- requesting (220), by the user device (120), access to the user account (118) from the online server (110);
- receiving (230), by the user device (120), at least one authentication request from the online server (110);
- forwarding, by the user device (120), the at least one authentication request to an authentication processor (134) of the digital content support (130);
- responding (240), by the authentication processor (134), to the at least one authentication request so as to prove that it is a legitimate authentication processor;
- sending (250), by the authentication processor (134), a unique identifier to the online server (110); and
- providing (260) access to the user account (118) corresponding to the unique identifier if the authentication processor (134) responded correctly to the at least one authentication request.

2. The method of claim 1, further comprising, before the receiving step, the step of:
- receiving, by the authentication processor (134), a password resulting from input made by a user; and
- proceeding with the method only if the password is correct.

3. The method of claim 1, further comprising the step of executing, by the user device (120), a program application stored in a storage area (132) of the digital content support (130), and wherein the authentication processor (134) proves that it is a legitimate processor for the program application.

4. A combination of a user device (120) and a digital content support (130), the combination being adapted to request access to a user account (118) from an online server (110):
- the user device (120) being adapted to:
send to the online server (110) a request to access the user account (118);
receive at least one authentication request from the online server (110); and
forward the at least one authentication request message to an authentication processor (134) of the digital content support (130); and
- the digital content support (130) comprises the authentication processor (134) adapted to:
store a unique identifier, the identifier being unique for the authentication processor;
respond to the at least one authentication request so as to prove that it is a legitimate authentication processor; and
send the unique identifier to the online server (110).

5. The combination of claim 4, wherein the digital content support (130) comprises a storage area (132) that stores at least parts of a program application, and the authentication processor (134) is adapted to prove that it is a legitimate processor for the program application.

6. A digital content support (130) for use by a user device (120), the digital content support comprising a storage area (132), an authentication processor (134) and at least one interface with a user device,
the storage area (132) comprising a program application for execution by the user device (120) intended to interact with an online server (110) during execution of the program application; and
the authentication processor (134) being adapted to:
- store a unique identifier, which is unique for the authentication processor (134);
- receive, from the user device (120), at least one authentication request message originating from the online server (110);
- respond to the at least one authentication request message so as to prove that it is a legitimate authentication processor; and
- send, to the user device (120) for forwarding to the online server (110), a unique identifier to the online server (110).

7. The digital support of claim 6, wherein the authentication processor (134) is further adapted to store data allowing password verification, receive a password resulting from input made by a user and respond to the authentication request only if the password is successfully verified using the data allowing password verification.
